# EUROPEAN PATENT SPECIFICATION

(11) **EP 2 012 318 B1**
(45) Date of publication and mention of the grant of the patent: **17.03.2010**
(21) Application number: 08159023.4
(22) Date of filing: 25.06.2008
(51) Int. Cl.: G11B 7/12

(54) **Lens holder for optical pickup and optical pickup having same**
Linsenhalter für optischen Lesekopf und optischer Lesekopf damit
Support de lentille pour la capture optique et capture optique dotée de celui-ci

(30) Priority: 03.07.2007 JP 2007174779
(43) Date of publication of application: 07.01.2009
(73) Proprietor: Funai Electric Co., Ltd., Daito-shi, Osaka 574-0013 (JP)
(72) Inventor: Hayashi, Sotaro FUNAI ELECTRIC CO., LTD., Osaka 574-0013 (JP); Kamioka, Yuichi FUNAI ELECTRIC CO., LTD., Osaka 574-0013 (JP)
(74) Representative: Beetz & Partner

(56) References cited:
- JP-A- 60 179 948
- JP-A- 2006 120 246

## Description

### BACKGROUND OF THE INVENTION

### Field of the Invention

The present invention relates to a lens holder for an optical pickup that holds an objective lens provided for an optical pickup, more particularly, to a lens holder for an optical pickup that has a protector to prevent the collision between an objective lens and an optical recording medium, and relates to an optical pickup which has the lens holder for an optical pickup.

### Description of the Related Art

Optical recording media such as compact discs (hereinafter, referred to as CD), digital versatile discs (hereinafter, referred to as DVD) etc. have been widely used. Further, recently, researches into high-density optical recording media have been carried out to increase the data size of optical recording media, and optical recording media, such as, for example, HD-DVDs and Blu-ray discs (hereinafter, called BD) that can record a large-size data have also been put to practical use.

To carry out recording and reproduction of data to and from such a recording medium with an optical disk apparatus, an optical pickup which directs a light beam to a recording medium to allow writing and reading of information is used. An optical pickup is equipped with an objective lens actuator which allows the light beam emitted from a light source to be focused invariably on the recording surface of an optical recording medium despite surface vibration of the optical recording medium, An objective lens actuator is provided to allow an objective lens held by a lens holder to move, and in an optical pickup, with this objective lens actuator, control operation is performed to ensure a constant positional relationship between the objective lens and the optical recording medium. Hereinafter, such control operation is sometimes represented as focus servo.

In a case where reading and writing of information from and to the optical recording medium (e.g., BD) mentioned above that can record large-size information is carried out with an optical pickup, the spot size formed on the optical recording medium by a light beam emitted from a light source need to be small. As an approach to make a small-size optical spot, usually not only a light source which emits a light beam having a short wavelength is used but also an objective lens having a large numerical aperture is used.

However, if the numerical aperture of the objective lens is large, the distance (working distance; WD) between the tip of the objective lens and the optical recording medium becomes narrow in carrying out reading and writing of information from and to the optical recording medium with an optical pickup. The tendency that the WD becomes narrow is especially noticeable in an optical pickup for, for example, a BD. If the WD becomes too narrow, the possibility that the optical lens and the optical recording medium collide with each other becomes very high in a case where an optical recording medium having a large surface vibration is used or in a case where the focus servo becomes out of function because of flaws on an optical recording medium or vibration from outside.

The WD becomes narrow not only in an optical pickup for a BD but also can become narrow in an optical pickup for an optical recording medium such as a CD, DVD or the like. Because a notebook computer and the like is required to be thin, an objective lens provided for an optical pickup is small in diameter, and also in such a case the WD becomes narrow. And also in such a case, the possibility that the objective lens and the optical recording medium collide with each other becomes very high.

Because of this, conventionally, to prevent the information recorded on the optical recording medium from becoming unusable because of the collision between the objective lens and the optical recording medium or to prevent the optical pickup form becoming unusable because of the objective lens being damaged, a protector to protect the collision has been provided in a lens holder that holds the objective lens (see patent documents 1 to 4).

In recent years, because of the advantages that it is excellent in height tolerance and can be this in layer thickness, a coating layer as shown in patent document 1 has a tendency to be disposed on the uppermost part of a lens holder to form a protector portion.

However, in a case where a coating layer is disposed on the uppermost part of a lens holder to form a protector portion, the cost of a coating material used to form the coating layer becomes very high. Accordingly, there is a problem that the production cost of an objective lens actuator and an optical pickup rises.

Because of this, taking low cost into consideration, it can be thought that a resin sheet that can be formed thin is used as a protector that prevents the collision between an objective lens and an optical recording medium. However, in a case where a resin sheet is used as a protector, because of the burrs on the circumferential part of the resin sheet, flaws (e.g., line flaws or the like) can be produced on the surface of an optical recording medium. If flaws are produced on the surface of an optical recording medium, reproduction and recording of information from and to the optical recording medium cannot be done.
[patent document 1] JP-A-2007-18632
[patent document 2] JP-A-2006-338783
[patent document 3] JP-A-2006-120246
[patent document 4] JP-A-2001-319355

The patent document 3 (JP 2006-120246) teaches a lens holder for an optimal pickup comprising a protector for preventing the collision between the optical recording medium and the objective lens having a protector placing surface on which the protectors placed, wherein the protector placing surface has on its partial region a protruding portion which protrudes outward. The protector is formed of silicone rubber and has a flat upper surface without protrusions.

### SUMMARY OF THE INVENTION

The present invention has been made to cope with the conventional problems, and it is an object of the present invention to provide a lens holder for an optical pickup which can curb the damage to an optical recording medium and an objective lens and which can be produced at low cost. And by providing such a lens holder for an optical pickup, it is another object of the present invention to provide an optical pickup which has a low possibility that an optical recording medium and an objective lens are damaged during the service time and which can be produced at low cost.

To achieve the above objects, a lens holder for an optical pickup according to the present invention comprises: a holding portion for holding an objective lens that concentrates a light beam on the recording surface of an optical recording medium; a protector for preventing the collision between the optical recording medium and the optical lens; and a protector placing surface on which the protector is placed. And the protector placing surface has on its partial region a protruding portion which protrudes outward, and the protector which is made of a resin sheet and disposed on the protector placing surface protrudes partially along the protruding portion except its circumferential portion.

According to this structure, even if burrs or the like are produced on its circumferential portion of the protector which is made of a resin sheet, the possibility that the burrs and the like contact the optical recording medium at the time of collision between the protector and the optical recording medium can be lowered. Accordingly, the damage to the optical recording medium due to the collision between the protector and the optical recording medium can be curbed. And because the structure where a resin sheet is used as the protector is employed, a lens holder for an optical pickup capable of curbing the damage to an optical recording medium and an objective lens can be fabricated at low cost compared with the case where a coating layer is used as the protector. Besides, because a resin sheet is used as the protector, it is easily applicable to an optical pickup whose WD is narrow.

In addition, in a lens holder for an optical pickup having the above-mentioned structure according to the present invention, the protruding portion may be formed by providing the protector placing surface with a substantially spherical surface, or may be formed by providing the protector placing surface with a step surface. In both cases, the damage to an optical recording medium and an objective lens can be curbed, and it is easy to achieve a lens holder for an optical pickup that can be fabricated at low cost

Further, in a lens holder for an optical pickup having the above-mentioned structure according to the present invention, the protruding portion is preferably made unitarily with another part forming the protector placing surface. In this way, it is possible to efficiently obtain a lens holder for an optical pickup that has a protector surface including a protruding portion.

In a lens holder for an optical pickup having the structure above-mentioned according to the present invention, the protectors to the number of two may be made and so disposed at nearly symmetrical positions as to interpose the holding portion therebetween. Thus, obtained is a structure where the collision between the optical recording medium and the objective lens is prevented. Accordingly, it is possible to efficiently achieve the collision protection function of the protector and further lower the possibility of the collision between the optical recording medium and the objective lens.

To achieve the foregoing objects, the present invention is characterized in that it comprises: a light source; an objective lens that concentrates a light beam emitted from the light source on the recording surface of an optical recording medium; and a lens holder for an optical pickup having the above-mentioned structure.

According to this structure, it is possible to curb the possibility that the optical recording medium and the objective lens are damaged during the service time of the optical pickup. Besides, the protector to prevent the collision between the optical recording medium and the objective lens can be obtained at low cost. Accordingly, an optical pickup that is low in possibility to damage an optical recording medium and an objective lens can be fabricated at low cost,

As described above, according to the present invention, it is possible to provide a lens holder for an optical pickup that can suppress the damage to an optical recording medium and an objective lens and can be fabricated at low cost. Besides, a lens holder for an optical pickup according to the present invention is easily applicable to an optical pickup that has a narrow WD. In addition, according to the preset invention, it is possible to provide an optical pickup that is low in possibility to damage an optical recording medium and an objective lens during its service time, and can be produced at low cost.

### BRIEF DESCRIPTION OF THE DRAWINGS

Fig. 1 is a schematic plan view showing a structure of an optical pickup according to the present embodiment.
Fig. 2 is a schematic view showing an optical system of the optical pickup according to the present embodiment.
Fig. 3 is a schematic plan view showing an objective lens actuator according to the present embodiment.
Fig. 4 is a schematic side view showing the objective lens actuator according to the present embodiment.
Fig. 5A is a sectional view taken at the A-A position in Fig. 3 and shows a state where a protector is not mounted on a lens holder.
Fig, 5B is a sectional view taken at the A-A position in Fig. 3 and shows a state where a protector is mounted on a lens holder.
Fig. 6 is a schematic plan view showing a structure of a lens holder for an optical pickup according to another embodiment.
Fig. 7A is a sectional view taken at the B-B position in Fig. 6 and shows a state where a protector is not mounted on a lens holder.
Fig. 7B is a sectional view taken at the B-B position in Fig. 6 and shows a state where a protector is mounted on a lens holder.

### DETAILED DESCRIPTION OF PREFERRED EMBODIMENTS

Hereinafter, the embodiments of the present invention are described referring to the drawings. The embodiments described here are only examples and the present invention is not limited the embodiments shown here.

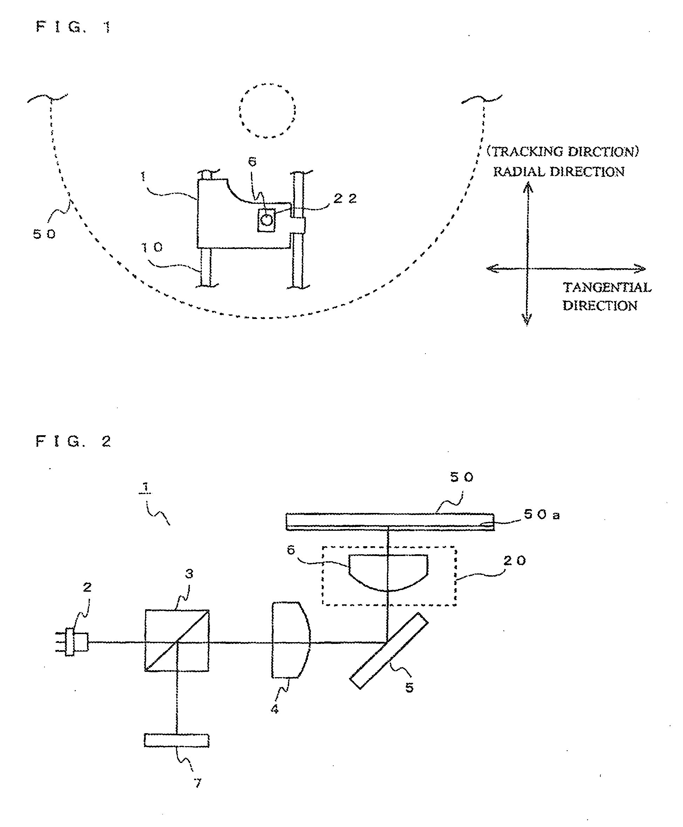

First, an example of an optical pickup having a lens holder for an optical pickup according to the present invention is explained referring to Figs. 1 and 2. Fig. 1 is a schematic plan view showing a structure of an optical pickup according to the present embodiment. Fig. 2 is a schematic view showing an optical system of an optical pickup according to the present embodiment.

An optical pickup 1 is an apparatus which can emit laser light to an optical disk (optical recording medium) 50 to carry out reading and writing information from and to it. When incorporated in an optical disc apparatus, as shown in Fig. 1, this optical pickup 1 is slidably supported by two guide rails 10 disposed in the optical disk apparatus. The optical pickup 1 is moved by a driving means, not shown, along the guide rails 10 that extend in the direction parallel to the radial direction of an optical disk 50 and carries out reading and writing information from and to the optical disk 50.

As shown in Fig. 2, an optical system provided for the optical pickup 1 comprises a light source 2, a beam splitter 3, a collimate lens 4, a mirror 5, an objective lens 6, and a photo detector 7. If necessary, disposed at suitable positions are other optical members, for example, a diffraction grating that divides a light beam emitted form the light source 2 into three beams, a wave-front aberration correction device that corrects wave-front aberration such as spherical aberration, comatic aberration and the like.

The light source 2 is a semiconductor laser that emits light having a single wavelength. The wavelength of the laser light emitted from the light source 2 is decided depending on the kind of the laser disk 50 from and to which reading and writing of information are carried out by the optical pickup 1. Specifically, for example, when the optical pickup 1 is used for a BD, a semiconductor laser that emits light having a wavelength of 405 nm is disposed, a semiconductor laser that emits light having a wavelength of 650 nm is disposed for a DVD, and a semiconductor laser that emits light having a wavelength of 780 nm is disposed for a CD.

The beam splitter 3 not only guides the laser light emitted from the light source 2 to the optical disk 50 but also reflects return light form the optical disk 50 to guide it to the photo detector 7. The laser light that is emitted from the light source 2 and passes through the beam splitter 3 is converted into parallel light by the collimate lens 4. Then, it is reflected by the mirror 5 and its traveling direction is turned to the direction substantially perpendicular to the disk surface of the optical disk 50. The laser light reflected by the mirror 50 is sent to the objective lens 6 and concentrated on a recording surface 50a of the optical disk 50 by the objective lens 6.

The laser light concentrated on the recording surface 50a of the optical disk 50 is reflected by the recording surface 50a. The return light reflected by the recording surface 50a passes through the objective lens 6, reflected by the mirror 5, passes through the collimate lens 4, reflected by the beam splitter 3 and collected by a light receiving region (not shown) of the photo detector 7.

The photo detector 7 has the function to convert a light signal received by the light receiving region into an electric signal. An electric signal output from the photo detector 7 is processed and turned into a reproduction signal for information reproduction, a focus error signal used for the focusing control of the objective lens 6, or a tracking error signal used for the tracking control of the objective lens 6. Here, the focusing control is to control the focal point of the objective lens 6 to come on the recording surface 50a of the optical disk 50. The tracking control is to control the position of a beam spot to always follow the track formed on the optical disk 50.

The objective lens 6 of the optical pickup 1 is held by the lens holder 22 (see Fig. 1), and can be moved in the focus and tracking directions by an object lens actuator 20 described in detail later. With this structure, the foregoing focusing control and the tracking control can be carried out.

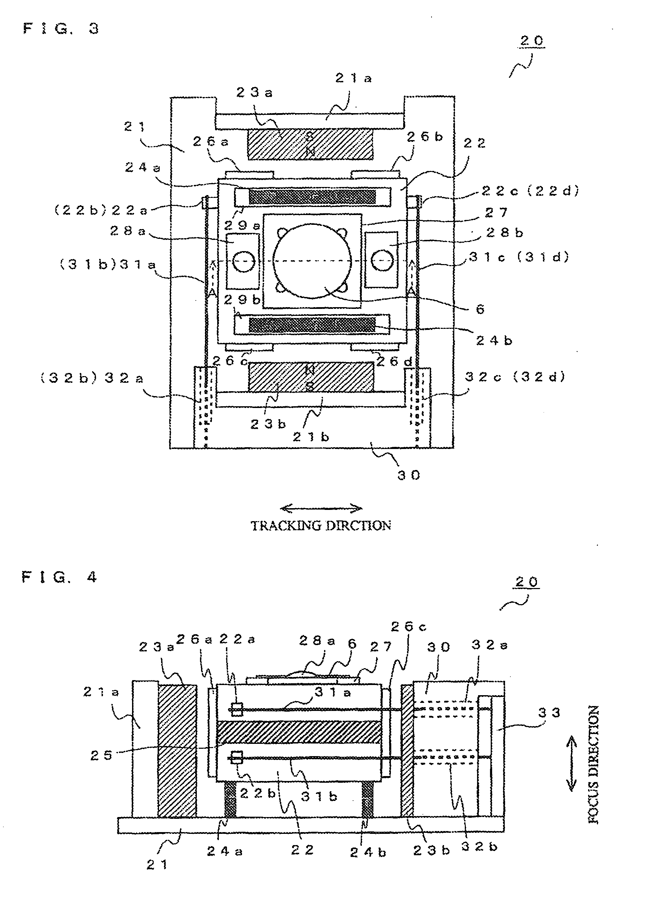

Next, the entire structure of an objective lens actuator 20 in the present embodiment is explained referring to Figs. 3 and 4. Fig. 3 is a schematic plan view of the objective lens actuator 20 according to the present embodiment Fig. 4 is a schematic side view of the objective lens actuator 20 according to the present embodiment.

The objective lens actuator 20 is roughly composed of a base 21 and a lens holder 22.

The base 21 is made of a ferromagnetic metal and a trough-hole (not shown) that allows laser light to pass therethrough is formed in the nearly central part of the base 21. The lens holder 22, which is described in detail later, is disposed over the through-hole. On the base 21, a pair of permanent magnets 23a, 23b are disposed uprightly facing each other with a given gap to interpose the lens holder 22 therebetween.

The permanent magnets 23a and 23b are disposed with their same poles facing each other. In the present embodiment, the permanent magnets 23a and 23b are arranged with their N (north) poles facing each other. With their magnetic force, the permanent magnets 23a and 23b attach to protruding parts 21a and 21b respectively that are formed by bending the base 21.

Besides, a pair of yokes 24a and 24b are disposed uprightly facing each other between the permanent magnets 23a and 23b. These yokes 24a and 24b are formed by bending from the base 21. The yokes 24a and 24b effectively draw the magnetic flux from the permanent magnets 23a and 23b respectively and give high-density flux chiefly to a focus coil 25 and tracking coils 26a to 26d explained later that are disposed between both permanent magnets 23a and 23b. In other words, the yokes 24a and 24b serve to improve the driving efficiency of the lens holder 22.

The lens holder 22 is provided with an optical path bole (not shown) through its central part extending in the direction perpendicular to the page surface of Fig. 3 to allow laser light to pass through and an objective lens holding portion 27 on the upper side of the cavity to hold the objective lens 6. The objective lens 6 held by the objective lens holding portion 27 is mounted with its optical axis parallel to the direction perpendicular to the page surface of Fig. 3. The lens holder 22 is provided with cavity portions 29a and 29b so that the yokes 24a and 24b described above can be inserted.

The focus coil 25 is disposed on the outer side wall of the lens holder 22 to surround the optical axis of the objective lens 6 mounted on the lens holder 22, and is fixed to the lens holder 22 with an adhesive or the like. On the side walls of the lens holder 22 that face the permanent magnets 23a and 23b, disposed are the tracking coils 26a to 26d, that is, one pair on one side wall with one on the left and the other on the right, and the other pair on the other side wall with one on the left and the other on the right, and they are fixed to the lens holder 22 with an adhesive or the like. The four tracking coils 26a to 26d are formed of a wire.

To prevent the collision between the optical disk 50 and the objective lens 6, the lens holder 22 is provided with two protectors 28a and 28b at substantially symmetrical positions with the objective lens holding portion 27 (the objective lens 6) interposed therebetween. The protectors are described in detail later.

On the base 21, a gel holder 30 comprising a molded component made of a resin such as polycarbonate or the like is fixed to the outside surface of the protruding part 21b attracted to one permanent magnet 23b of the two permanent magnets 23a and 23b. A circuit board 33 is disposed uprightly next to the gel holder 30 on the base 21.

Each end of electroconductive wires 31a, 31b, 31c, and 31d is connected to this circuit board 33 by soldering, that is, two wires on each of the left and right sides and in a vertical line on each side. These four wires 31a to 31d are respectively inserted via through-holes 32a, 32b, 32c, and 32d that are formed through the gel holder 30 at two positions on each of the left and right sides and in a vertical line corresponding to the connecting positions of the circuit board 33.

The other ends of the wires 31a and 31c located at the upper portion are electrically connected to the focus coil 25 by soldering at the wire supporting portions 22a and 22c disposed on the lens holder 22, respectively. The other ends of the wires 31b and 31d located at the lower portion are respectively connected electrically to the tracking coils 26a to 26d by soldering at the wire supporting portions 22b and 22d disposed on the lens holder 22. Thus, the lens holder 22 is movably supported by the wires 31a to 31d over the base 21

A gel member containing silicon as the main component is loaded into each of the through-holes 32a to 32d of the gel holder 30 through which each of the wires 31a to 31d is inserted. Here, the gel member is formed in the following way: A low-viscosity gel material (sol) is injected into each of the through-holes 32a to 32d of the gel holder 30 and then they are gelatinized by ultra-violet irradiation for a given time, The gel holder 30 uses the gel member to attenuate and curb the vibration of each of the wires 31a to 31d generated by the driving of the lens holder 22.

The function of the objective lens actuator 20 having the structure described above is briefly described. When an electric current is supplied to the focus coil 25 via the wires 31a and 31c from the circuit board 33, the lens holder 22 is moved in the focus direction by electromagnetic action (electromagnetic force action) given by the combination of the magnetic circuit formed by the base 21, the permanent magnets 23a, 23b and yokes 24a, 24b and the electric circuit. Accordingly, the position control (focusing control) over the objective lens 6 in the focus direction is possible by adjusting the intensity and flowing direction of the current supplied to the focus coil 25.

When an electric current is supplied to the tracking coils 26a to 26d via the wires 31b and 31d from the circuit board 33, the lens holder 22 is moved in the tracking direction by electromagnetic action (electromagnetic force action) given by the combination of the magnetic circuit formed by the base 21, the permanent magnets 23a, 23b and yokes 24a, 24b and the electric circuit. Accordingly, the position control (tracking control) over the objective lens 6 in the tracking direction is possible by adjusting the intensity and flowing direction of the current supplied to the tracking coils 26a to 26d.

In the present embodiment, the number of wires is four in all, that is, two wires on each side. However, it is not limited to this number, for example, six wires in all, that is, three on each side, may be used. Besides, in the present embodiment, the lens holder 22 is movable in the focus and tracking directions. However, it may be so structured that the lens holder 22 can be moved in other fashions, as an example, it may be rotated about the axis intersecting at right angles with the focus and tracking directions. In this case, a coil (tilt coil) different from the focus coil and the tracking coil needs to be disposed. And, in this case, a structure for supplying an electric current to the tilt coil is needed, for example, it is possible to supply an electric current to the tilt coil using six wires, that is, three on one side and three on the other side.

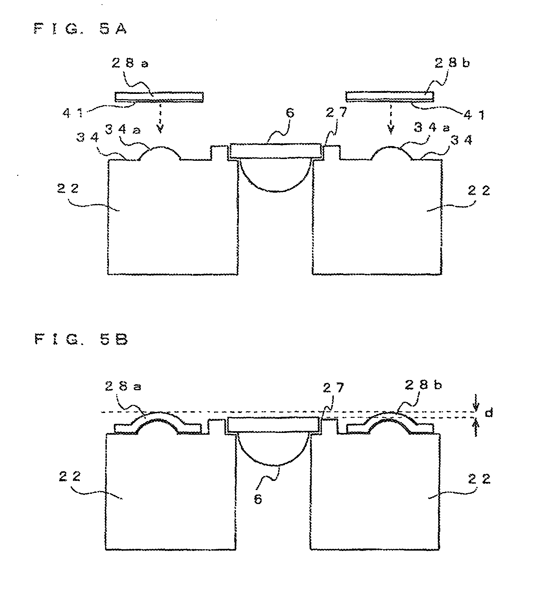

Next, the protectors 28a and 28b disposed on the lens holder 22 to prevent the collision between the optical disk 50 and the objective lens 6 are described in detail referring to chiefly Figs. 5A and 5B. Fig. 5A is a sectional view taken at the A-A position in Fig. 3 and shows a state where the protectors 28a and 28b are not mounted on the lens holder 22. Fig. 5B is a sectional view taken at the A-A position in Fig. 3 and shows a state where the protectors 28a and 28b are mounted on the lens holder 22.

As shown in Fig.5A. the protectors 28a and 28b mounted on the lens holder 22 are made of a sheet-shaped resin (resin sheet). As a material to form the resin sheet, there are, for example, ultra-high-molecular-weight polyethylene, POM (polyacetal), nylon or the like. However, it is not limited to these, if necessary, a material is suitably selected from resin materials which hardly damages the optical disk 50 when it collides with the optical disk 50.

The lens holder 22 is provided with the protector placing surfaces 34 at two positions to place the protectors 28a and 28b with the objective lens holding portion 27 interposed therebetween. As shown in Fig. 5A, this protector placing surface 34 has on its partial region a protruding portion 34a that protrudes outward (toward the place where the optical disk 50 is disposed). In the present embodiment, the protruding portion 34a is a substantially spherical surface portion of the protector placing surface 34. Specifically, the protruding portion 34a is formed of a substantially spherical surface which the protector placing surface 34 includes.

In the present embodiment, the protruding portion 34a of the protector placing portion 34 is made unitarily with another part which forms the protector placing surface 34. However, it is not limited to this structure, and for example, the protruding portion 34a may be formed in the following way: A substantially hemispherical member is separately prepared. Then, it is placed on the surface formed on the lens holder 22 to provide the protector placing surface as shown in the present embodiment.

In the present embodiment, the protector placing surface 34 is unitarily formed with the main body of the lens holder 22 made of, for example, liquid crystal polymer (LCP). However, it is not limited to this structure, and for example, it may be formed in the following way: A member provided with a protector placing surface as in the present embodiment is separately prepared. Then, it is mounted on the lens holder 22.

The protectors 28a and 28b made of a resin sheet are provided with a adhesive layer 41 (see Fig. 5A) on the back side (the side that does not collide with the optical disk 50), thereby the protectors 28a and 28b are attached on the protector placing surface 34. Because the protectors 28a and 28b are formed of a thin resin sheet, a part of them protrudes along the protruding portion 34a as shown in Fig. 5B when they are attached on the protector placing surfaces 34.

As shown in Fig. 5B, it is so designed that the highest portions of the protectors 28a and 28b are higher than the highest portion of the objective lens 6 by a given height of d. Besides, in the present embodiment, as shown in Fig. 3, the protectors 28a and 28b protrude at neatly central portions thereof.

Thus, by providing the lens holder 22 with the protectors 28a and 28b, the collision between the optical disk 50 and the objective lens 6 can be prevented. Besides, when the optical disk 50 collides with the protectors 28a and 28b, it is also possible to prevent the contact of the circumferential portions of the protectors 28a and 28b made of a resin sheet and the optical disk 50. Accordingly, it is possible to prevent the optical disk 50 from being damaged by the burrs produced on the circumferential portions of the protectors 28a and 28b. It is needless to say that the protruding amount of the protruding portions 34a of the protector placing surfaces 34 must be decided by taking the size (height) of the burrs produced on the circumferential portions of the protectors 28a and 28b into account.

In the present embodiment, the protector placing surface 34 is provided with a substantially spherical surface, and the substantially spherical surface portion is used as the protruding portion 34a. However, the protruding portion of the protector placing surface 34 is not limited to this structure, and various modifications can be made within the objects of the present invention. Hereinafter, the other embodiment is explained referring to Figs, 6, 7A and 7B.

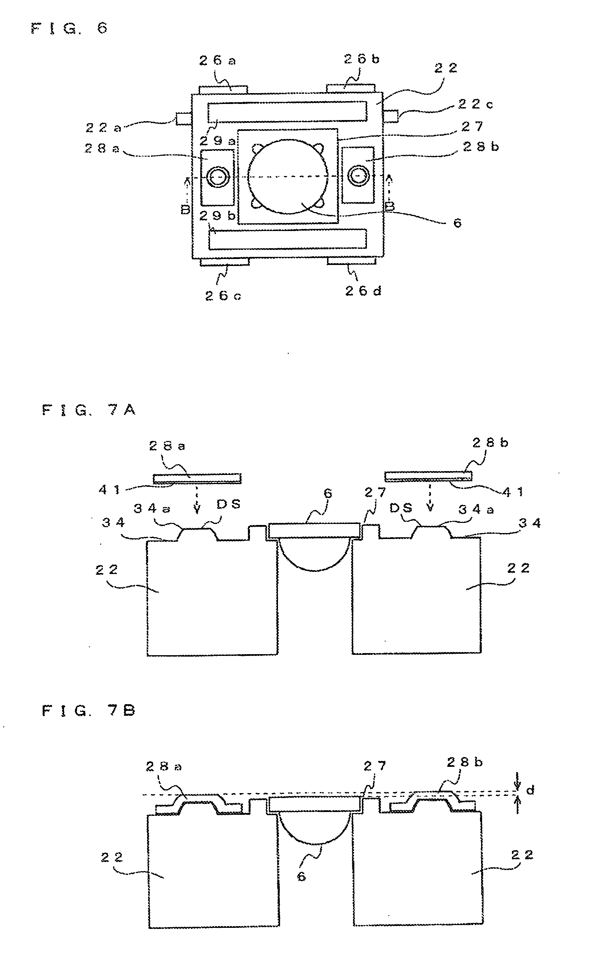

Fig. 6 is a schematic plan view showing a lens holder for an optical pickup according to the other embodiment. Fig. 7A is a sectional view taken at the B-B position in Fig. 6 and shows a state where the protectors 28a and 28b are not mounted on the lens holder 22. Fig. 7B is a sectional view taken at the B-B position in Fig. 6 and shows a state where the protectors 28a and 28b are mounted on the lend holder 22.

The protectors 28a and 28b mounted on the lens holder 22 are made of a resin sheet. The protectors 28a and 28b are respectively attached on the two protector placing surfaces 34 which are formed on the lens holder 22 to interpose the objective lens holding portion 27 therebetween. As shown in Fig. 7A, the protector placing surface 34 has on its partial region a protruding portion 34a which protrudes outward. This protruding portion 34a is formed of a step surface DS which the protector placing surface 34 includes.

Also in this case, because the protectors 28a and 28b attached on the protector placing surfaces 34 are made of a this resin sheet, a part of them protrudes along the protruding portion 34a as shown in Fig. 7B. As shown in Fig. 7B, it is so designed that the highest portions of the protectors 28a and 28b are higher than the highest portion of the objective lens 6 by a given height of d. Besides, in the present embodiment, as shown in Fig. 6, the positions where the protectors 28a and 28b protrude are neatly central portions thereof.

Also in such structure, with the protectors 28a and 28b, the collision between the optical disk 50 and the objective lens 6 can be prevented. Besides, when the optical disk 50 collides with the protectors 28a and 28b, it is also possible to prevent the contact of the circumferential portions of the protectors 28a and 28b made of a resin sheet and the optical disk 50. Accordingly, it is possible to achieve a structure where the optical disk 50 is prevented from being damaged by the burrs generated on the circumferential portions of the protectors. 28a and 28b.

The present invention is not limited to the embodiments described above, and various modifications can be made within the objects of the present invention.

For example, in the foregoing embodiments, the positions where the protectors 28a and 28b protrude are nearly central portions thereof, but they are not limited to this structure. Specifically, it may be so structured that part of the protectors 28a and 28b except the circumferential portions protrudes outward to prevent the contact of the circumferential portions of the protectors 28a and 28b and the optical disk 50. Besides, there may be a plurality of positions where the protectors 28a. and 28b protrude.

In the embodiments described above, the positions where the protectors 28a and 28b are disposed are substantially symmetrically arranged to interpose the objective lens holding portion, 27 therebetween. However, it is not limited to this structure, and the protectors 28a and 28b may be so arranged to prevent the collision between the optical disk 50 and the objective lens 6, and the number (one, three or more) of protectors can be suitably changed and their positions can also be changed suitably.

Besides, in the embodiments described above, the structure where the lens holder 22 is movably supported by the wires (the structure where the lens holder is mounted on a wire supporting type of objective lens actuator) is explained. However, the lens holder according to the present invention is applicable to other moving structures. For example, the present invention can be applicable to a structure where a lens holder is moved by sliding it on a shaft (a structure where the lens holder is mounted on a shaft slide type of objective lens actuator).

In the embodiments described above, the lens holder applicable to the optical pickup for one kind of optical disk is explained, but it is needless to say that the lens holder according to the present invention can be applied to an optical pickup (inclusive of an optical pickup having a lens holder that incorporates a plurality of objective lenses) with which a plurality of kinds of optical disks are compatible.

According to the present invention, it is possible to provide a lens holder for an optical pickup which can curb the damage to an optical recording medium and an objective lens. Accordingly, the present invention is useful in the technical field of optical pickups.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A lens holder for an optical pickup comprising:
a holding portion (27) for holding an objective lens (6) which concentrates a light beam on a recording surface (50a) of an optical recording medium;
a protector (28a; 28b) for preventing the collision between the optical recording medium and the objective lens (6);
a protector placing surface (34) on which the protector (28a; 28b) is placed,
wherein
the protector placing surface (34) has on its partial region a protruding portion (34a) which protrudes outward,
**characterized in that** a part of the protector (28a, 28b) which is placed on the protector placing surface (34) and formed of a resin sheet protrudes along the protruding portion (34a), wherein said protruding part of the protector (28a, 28b) does not include a circumferential portion of the protector (28a; 28b).

2. The lens holder for an optical pickup according to claim 1, wherein the protruding portion (34a) is formed of a substantially spherical surface which the protector placing surface (34) includes.

3. The lens holder for an optical pickup according to claim 1, wherein the protruding portion (34a) is formed of a step surface which the protector placing surface (34) includes.

4. The lens holder for an optical pickup according to any one of claims 1 to 3, wherein the protruding portion (34a) is made unitarily with another part which forms the protector placing surface (34).

5. The lens holder for an optical pickup according to any one of claims 1 to 4, wherein the protectors (28a; 28b) to the number of two are provided, and the two protectors (28a; 28b) are arranged at substantially symmetrical positions to interpose the holding portion (27) therebetween.

6. An optical pickup comprising the lens holder for an optical pickup according to any one of claims 1 to 5, further comprising:
a light source (2); and
an objective lens (6) for concentrating a light beam emitted from the light source (2) on a recording surface (50a) of an optical recording medium.

## Patentansprüche

1. Linsenhalter für eine optische Abtastvorrichtung, der umfasst:
einen Haltebereich (27) zum Halten einer Objektivlinse (6), die einen Lichtstrahl auf eine Aufzeichnungsoberfläche (50a) eines optischen Aufzeichnungsmediums bündelt;
eine Schutzeinrichtung (28a, 28b) für die Verhinderung der Kollision zwischen dem optischen Aufzeichnungsmedium und der Objektivlinse (6);
eine Oberfläche (34) für die Anordnung der Schutzeinrichtung, auf der die Schutzeinrichtung (28a; 28b) angeordnet wird, wobei die Oberfläche (34) für die Anordnung der Schutzeinrichtung auf einem Teilbereich einen hervorstehenden Bereich (34a) aufweist der nach außen hervorsteht,
**dadurch gekennzeichnet, dass** ein Teil der Schutzeinrichtung (28a, 28b), die auf der Oberfläche (34) für die Anordnung der Schutzeinrichtung angeordnet ist und die aus einem Bogen aus einem Harz gebildet ist, entlang dem hervorstehenden Bereich (34a) hervorsteht, wobei der hervorstehende Teil der Schutzeinrichtung (28a, 28b) einen peripheren Bereich der Schutzeinrichtung (28a, 28b) nicht einschließt.

2. Linsenhalter für eine optische Abtastvorrichtung nach Anspruch 1, wobei der hervorstehende Bereich (34a) aus einer im Wesentlichen kugelförmigen Oberfläche gebildet ist, die von der Oberfläche (34) für die Anordnung der Schutzeinrichtung eingeschlossen ist.

3. Linsenhalter für eine optische Abtastvorrichtung nach Anspruch 1, wobei der hervorstehende Bereich (34a) aus einer Stufenoberfläche gebildet ist, die von der Oberfläche (34) für die Anordnung der Schutzeinrichtung eingeschlossen ist.

4. Linsenhalter für eine optische Abtastvorrichtung nach einem der Ansprüche 1 bis 3, wobei der hervorstehende Bereich (34) einteilig mit dem anderen Teil hergestellt ist, das die Oberfläche (34) für die Anordnung der Schutzeinrichtung bildet.

5. Linsenhalter für eine optische Abtastvorrichtung nach einem der Ansprüche 1 bis 4, wobei die Schutzeinrichtungen (28a; 28b) in einer Anzahl von zwei bereitgestellt werden und die beiden Schutzeinrichtungen (28a; 28b) in im Wesentlichen symmetrischen Positionen so angeordnet sind, dass der Haltebereich (27) dazwischen eingefügt ist.

6. Optische Abtastvorrichtung, die den Linsenhalter für eine optische Abtastvorrichtung nach einem der Ansprüche 1 bis 5 umfasst, die weiterhin umfasst:
eine Lichtquelle (2); und
eine Objektivlinse (6) für die Bündelung eines Lichtstrahls, der von der Lichtquelle (2) emittiert wird, auf eine Aufzeichnungsoberfläche (50a) eines optischen Aufzeichnungsmediums.

## Revendications

1. Support de lentille pour dispositif de lecture optique comprenant :
une partie de support (27) permettant de supporter une lentille d'objectif (6) qui concentre un faisceau lumineux sur une surface d'enregistrement (50a) d'un support d'enregistrement optique ;
un dispositif de protection (28a, 28b) permettant d'empêcher la collision entre le support d'enregistrement optique et la lentille d'objectif (6) ;
une surface de placement du dispositif de protection (34) sur laquelle le dispositif de protection (28a, 28b) est placé, dans lequel
la surface de placement du dispositif de protection (34) possède sur sa zone partielle une partie saillante (34a) qui fait saillie vers l'extérieur,
**caractérisé en ce qu'**une partie du dispositif de protection (28a, 28b) qui est placée sur la surface de placement du dispositif de protection (34) et qui est constituée d'une feuille de résine fait saillie le long de la partie saillante (34a), ladite partie saillante du dispositif de protection (28a, 28b) n'incluant pas une partie circonférentielle du dispositif de protection (28a, 28b).

2. Le support de lentille pour dispositif de lecture optique selon la revendication 1, dans lequel la partie saillante (34a) est constituée d'une surface sensiblement sphérique qui fait partie de la surface de placement du dispositif de protection (34).

3. Le support de lentille pour dispositif de lecture optique selon la revendication 1, dans lequel la partie saillante (34a) est formée d'une surface formant une marche qui fait partie de la surface de placement du dispositif de protection (34).

4. Le support de lentille pour dispositif de lecture optique selon l'une quelconque des revendications 1 à 3, dans lequel la partie saillante (34a) forme une seule pièce avec une autre partie qui forme la surface de placement du dispositif de protection (34).

5. Le support de lentille pour dispositif de lecture optique selon l'une quelconque des revendications 1 à 4, dans lequel les dispositifs de protection (28a, 28b) sont fournis au nombre de deux et les deux dispositifs de protection (28a, 28b) sont disposés dans des positions sensiblement symétriques pour interposer la partie de support (27) entre les deux.

6. Dispositif de lecture optique comprenant le support de lentille pour dispositif de lecture optique selon l'une quelconque des revendications 1 à 5, comprenant en outre :
une source lumineuse (2) ; et
une lentille d'objectif (6) permettant de concentrer un faisceau lumineux émis par la source lumineuse (2) sur une surface d'enregistrement (50a) d'un support d'enregistrement optique.
